# EUROPEAN PATENT APPLICATION

(11) **EP 2 512 142 A2**
(43) Date of publication of application: **17.10.2012**
(21) Application number: 10836208.8
(22) Date of filing: 08.12.2010
(51) Int. Cl.: H04N 13/00

(54) **APPARATUS AND METHOD FOR EXTRACTING A TEXTURE IMAGE AND A DEPTH IMAGE**

(30) Priority: 08.12.2009 KR 20090120920
(71) Applicant: Electronics and Telecommunications Research Institute, Daejeon 305-700 (KR)
(72) Inventor: KIM, Jin Woong, Daejeon 305-700 (KR); RIBERA, Roger, Blanco, Daejeon 305-700 (KR); KIM, Tae One, Daejeon 305-700 (KR); CHANG, Eun Young, Daejeon 305-700 (KR); KIM, Wook Joong, Daejeon 305-700 (KR); HUR, Nam Ho, Daejeon 305-700 (KR); LEE, Soo In, Daejeon 305-700 (KR); HWANG, Seung ku, Daejeon 305-700 (KR)
(74) Representative: Betten & Resch
(86) International application number: PCT/KR2010/008758
(87) International publication number: WO 2011/071313

(57) **Abstract**

Provided are an apparatus and method for extracting a texture image and a depth image. The apparatus of the present invention may project a pattern image on a target object, may capture a scene image on which the target image is reflected from the target object, and may simultaneously extract the texture image and the depth image using the scene image.

## Description

### Technical Field

The present invention relates to an apparatus and a method for extracting a texture image and a depth image, and more particularly, to an apparatus and a method that may simultaneously extract the texture image and the depth image by projecting a pattern image that may be temporally integrated to be a white image.

### Background Art

As a field related to three-dimensional (3D) imaging, such as a 3DTV, has developed, a demand for extraction of depth information of an object that is temporally changed has increased. A method of extracting the depth information in a 3D technology uses a stereo scheme. The stereo scheme indicates usage of a left image and a right image for a 3D display. However, when both the left image and the right image are transmitted in order to provide a 3DTV service, a problem with a bandwidth of a transmission channel may arise.

A method using the depth information is provided to resolve the problem with the bandwidth. Particularly, a suggested new method may transmit a texture image corresponding to a color image, and a depth image corresponding to the texture image, and may compose a stereo image using scene composition, thereby resolving the bandwidth problem.

A texture image and a depth image are difficult to obtain using a conventional method when a target object is dynamic. Also, when the target object corresponds to a human, a white light that may be projected to the human in order to obtain the texture image and the depth image caused inconvenience to a vision of the human. In addition, when a color exists on a surface of the target object included in a 3D image, or an ambiance illumination exists in the target object, accuracy of the texture image is reduced.

### Disclosure of Invention

### Technical Goals

An aspect of the present invention provides an apparatus and a method that may capture a scene image by consecutively projecting, on a target object, a pattern image that may be temporally integrated to be a white light, thereby simultaneously obtaining a texture image and a depth image of the target object.

An aspect of the present invention provides an apparatus and a method that may project, on a target object, a pattern image that may be temporally integrated to be a white light, thereby preventing inconvenience caused to a vision of a human due to projection of the white light.

An aspect of the present invention provides an apparatus and a method that may obtain correspondence points robust against a color on a surface of a target object, and an ambiance illumination by decoding a pattern image encoded by verifying a color of a scene image using a texture image of the target object.

### Technical solutions

According to an embodiment of the present invention, there is provided an apparatus, including a pattern image projecting unit to project a pattern image on a target object, an image capturing unit to capture a scene image on which the pattern image is reflected from the target object, and an image processing unit to extract a texture image and a depth image using the captured scene image.

According to an embodiment of the present invention, there is provided a method, including projecting, by a pattern image projecting unit, a pattern image on a target object, capturing, by an image capturing unit, a scene image on which the pattern image is reflected from the target object, and extracting, by an image processing unit, a texture image and a depth image using the captured scene image.

### Effect of the Invention

According to an embodiment of the present invention, it is possible to simultaneously obtain a texture image and a depth image of a target object by consecutively projecting, on a target object, a pattern image that may be temporally integrated to be a white light, and capturing a scene image.

According to an embodiment of the present invention, it is possible to prevent inconvenience caused to a vision of a human due to projection of a white light, by projecting, on a target object, a pattern image that may be temporally integrated to be the white light.

According to an embodiment of the present invention, it is possible to obtain correspondence points that may be robust against a color on a surface of a target object, and against an ambiance illumination, by decoding a pattern image encoded by verifying a color of a scene image using a texture image of the target object.

### Brief Description of Drawings

FIG. 1 is a diagram illustrating an apparatus for simultaneously extracting a texture image and a depth image according to an embodiment of the present invention.
FIG. 2 illustrates a pattern arrangement of a pattern image according to an embodiment of the present invention.
FIG. 3 is a diagram illustrating a process of extracting a texture image from a scene image according to an embodiment of the present invention.
FIG. 4 is a diagram illustrating a process of capturing a scene image into which a pattern image is temporally integrated according to an embodiment of the present invention.
FIG. 5 is a diagram illustrating a process of capturing a scene image using a beam splitter according to an embodiment of the present invention.
FIG. 6 illustrates a relationship between a surface of a target object and a reflected light according to an embodiment of the present invention.
FIG. 7 illustrates a CIE Lab chart according to an embodiment of the present invention.
FIG. 8, parts (a), (b), and (c), illustrate an example of verifying a color of a scene image according to an embodiment of the present invention.
FIG. 9 illustrates a synchronizing signal between a pattern projecting unit and an image capturing unit according to an embodiment of the present invention.
FIG. 10 illustrates a synchronizing signal between a pattern projecting unit and an image capturing unit according to another embodiment of the present invention.
FIG. 11 is a flowchart illustrating an apparatus for simultaneously extracting a texture image and a depth image according to an embodiment of the present invention.

### Best Mode for Carrying Out the Invention

Reference will now be made in detail to embodiments of the present invention, examples of which are illustrated in the accompanying drawings, wherein like reference numerals refer to the like elements throughout. The embodiments are described below in order to explain the present invention by referring to the figures.

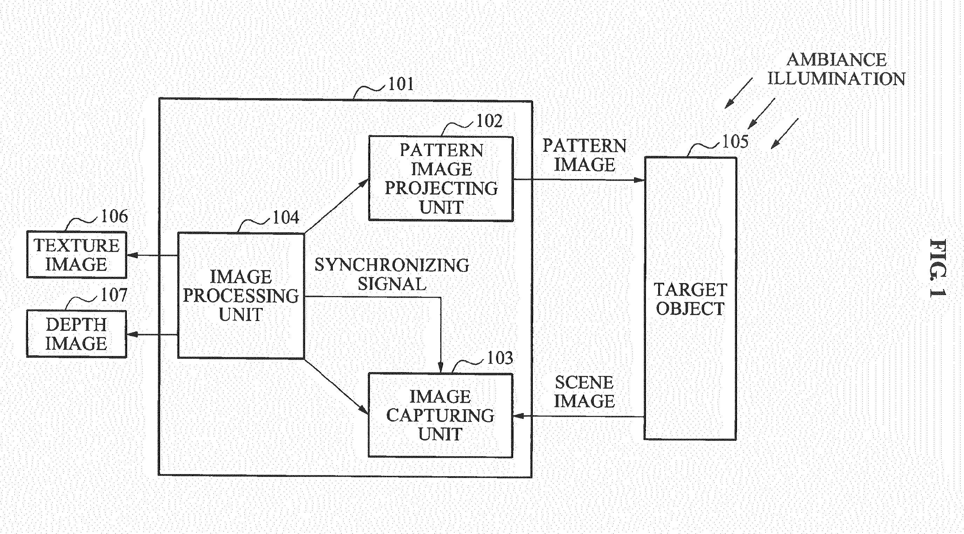

FIG. 1 is a diagram illustrating an apparatus for simultaneously extracting a texture image and a depth image according to an embodiment of the present invention.

Referring to FIG. 1, an apparatus 101 may include a pattern image projecting unit 102, an image capturing unit 103, and an image processing unit 104.

The pattern image projecting unit 102 may project a pattern image on a target object 105. The pattern image projecting unit 102 may store the pattern image in a buffer, and may sequentially and repeatedly project the pattern image stored in the buffer based on a synchronizing signal of the image processing unit 104. That is, the pattern image projecting unit 102 may project, on the target object 105, a pattern image where predetermined information is encoded, based on a structured light technique.

Here, the pattern image projecting unit 102 may project the pattern image based on a temporal pattern arrangement, or a spatial pattern arrangement. The pattern image projecting unit 102 may project a pattern image based on a De Bruijin pattern arrangement among spatial pattern arrangements.

The pattern image according to an embodiment of the present invention may be projected on the target object 105 at a high speed based on the pattern arrangement. Here, when the pattern image is integrated for a predetermined period of time, the pattern image may produce an effect analogous to projecting a white light. That is, the pattern image may be classified as red (R), green (G), and blue (B) in a high speed camera, whereas the pattern may be classified based on a white light combined with R, G, and B in a general camera. According to an embodiment of the present invention, the effect analogous to projecting a single white light may be produced by consecutively projecting the pattern image including R, G, and B for each pixel of the target object 105. Then, a single texture image 106 and a depth image 107 may be obtained from a scene image on which three pattern images are reflected from the target object 105.

The image capturing unit 103 may capture the scene image on which the pattern image is reflected from the target object 105. Here, the image capturing unit 103 may capture the scene image on which the pattern image is projected on the target object 105 and reflected from the target object 105.

In this case, the image capturing unit 103 may include at least one camera, and a type of the camera may correspond to a general camera or a high speed camera. As described above, the general camera may recognize the pattern image as a white light, as opposed to classifying the pattern image as R, G, and B. The high speed camera may refer to a camera that may classify the pattern image as R, G, and B.

The image processing unit 104 may extract the texture image 106 and the depth image 107 with respect to the target object 105 using the captured scene image.

For example, the image processing unit 104 may extract the depth image 107 by applying a structured light technique and a stereo matching technique. As a passive approach to extract depth information of the target object 105, the stereo matching technique may be used. As an active approach to extract the depth information of the target object 105, the structured light technique may be used.

The stereo matching technique may basically refer to a technique to obtain correspondence points between captured images after at least two images, each having a different viewpoint, are captured. When the camera is calibrated, three-dimensional (3D) depth information may be obtained by applying trigonometry to the correspondence points. Here, according to the stereo matching technique, when a surface of the target object 105 is homogenous without a texture, ambiguity may arise and the correspondence points may be difficult to obtain.

The structured light technique may project a predetermined pattern light and remove the ambiguity, thereby calculating the correspondence points, even when the surface of the target object 105 is homogenous. The structured light technique may obtain the correspondence points by projecting, on the target object 105, a pattern image where predetermined information is encoded, then by capturing a scene image reflected from the target object 105, and by decoding the captured scene image. Here, when the scene image is decoded, verification of a color of the scene image may be important. The color of the scene image may be verified based on the texture image of the target object 105. When the texture image of the target object 105 is used, an effect by a color on the surface of the target object 105 or an ambiance illumination may be removable, and thus the scene image may be decoded to be more robust.

The image processing unit 104 may extract the texture image 106 of the target object 105 using various schemes. Here, a different scheme of extracting the texture image 106 of the target object 105 may be used when the image capturing unit 103 corresponds to a high speed camera or a general camera. When the image capturing unit 103 corresponds to the high speed camera, the image processing unit 104 may average scene images captured by the image capturing unit 103, and may extract the texture image 106 of the target object 105. When the image capturing unit 103 corresponds to the general camera, the image capturing unit 103 may capture a scene image that may be temporally integrated by maintaining a shutter speed to be relatively long. Then, the image processing unit 104 may extract the texture image 106 of the target object 105 using the temporally integrated scene image.

When the image capturing unit 103 corresponds to both a general camera and a high speed camera, each of the general camera and the high speed camera may capture the scene image on which the pattern image is reflected from the target object 105, using a beam splitter.

A process of extracting the texture image 106 and the depth image 107 of the target object 105 will be further described.

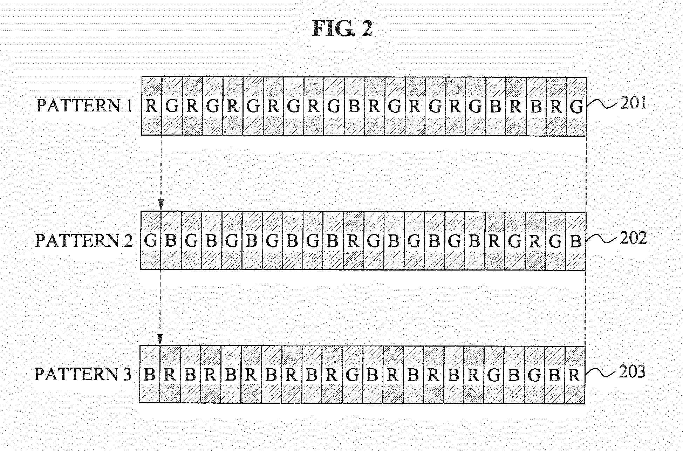

FIG. 2 illustrates a pattern arrangement of a pattern image according to an embodiment of the present invention.

According to composition of a light, when R, G, and B are combined, a white light may be generated. Here, the pattern image projecting unit 102 may project a pattern image based on a De Bruijin pattern arrangement as illustrated in FIG. 2. Referring to FIG. 2, the pattern image may be projected on a target object in a spatial order of a pattern 1, 201, a pattern 2, 202, and a pattern 3, 203. That is, a single stripe color may be temporally changed in an order of R, G, and B based on the order of the pattern 1, 201, the pattern 2, 202, and the pattern 3, 203. Then, a vision of a human may integrate the pattern image for a predetermined period of time, and finally sense the pattern image as a white light.

Also, an analogous effect may be produced even when the stripe color is arranged in an order of R, B, and G as well as the order of R, G, and B. Accordingly, a number of information included in the encoded pattern image may be doubled based on a temporal pattern arrangement, as well as, a spatial pattern arrangement.

That is, an analogous effect may be produced by projecting a pattern image where predetermined information is encoded, instead of projecting a white light that may cause inconvenience to a vision of the human, in order to extract a texture image of a target object.

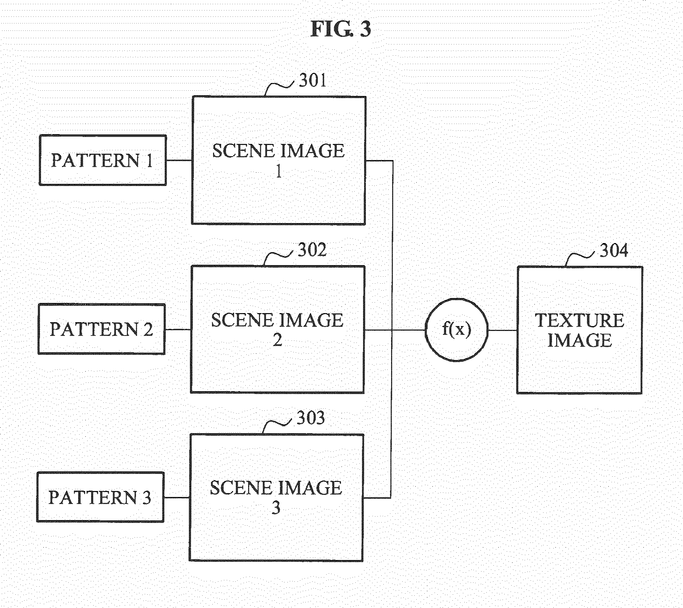

FIG. 3 is a diagram illustrating a process of extracting a texture image from a scene image according to an embodiment of the present invention.

In FIG. 3, a process of extracting a texture image from a scene image on which a target image is reflected from the target object. Particularly, FIG. 3 illustrates a process of extracting a texture image 304 when the image capturing unit 103 captures a scene image 1, 301, a scene image 2, 302, and a scene image 3, 303.

The image capturing unit 103 may capture the scene image 1, 301, the scene image 2, 302, and the scene image 3, 303 based on a pattern image projected by the pattern image projecting unit 102. Then, the image processing unit 104 may extract the texture image 304 with respect to the target object by calculating an average of the scene image 1, 301, the scene image 2, 302, and the scene image 3, 303.

The texture image 304 may be extracted when a white light is projected, however, according to an embodiment of the present invention; the texture image 304 may be extracted using a characteristic of the white light, the characteristic that the white light is extracted when pattern images are temporally integrated. When the target object corresponds to a human, direct projection of the white light may cause inconvenience to a vision of the human, and thus an effect analogous to projecting the white light may be produced by consecutively projecting the pattern image.

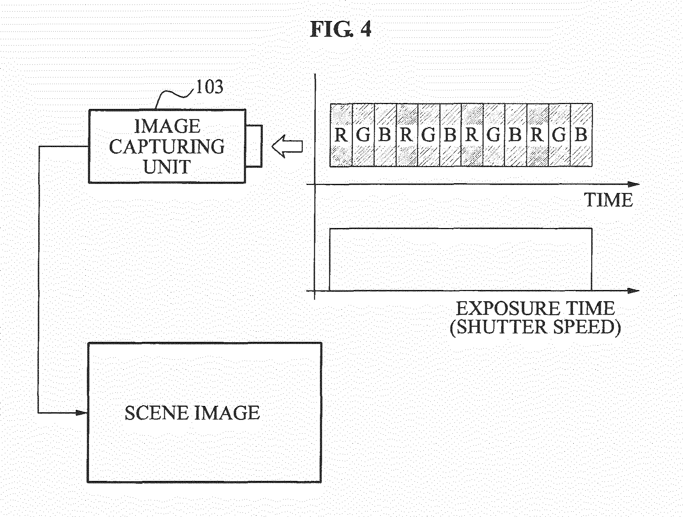

FIG. 4 is a diagram illustrating a process of capturing a scene image into which a pattern image is temporally integrated according to an embodiment of the present invention.

FIG. 4 illustrates a case that the image capturing unit 103 corresponding to a general camera captures a scene image. The image capturing unit 103 may capture the scene image into which three successive pattern images are temporally integrated by maintaining a shutter speed to be relatively long, that is, to have a relatively long exposure time. The scene image into which the pattern image is temporally integrated may have an effect analogous to the scene image on which a white light is projected on a target object and reflected from the target object.

Then, the image processing unit 104 may extract a texture image of the target object from the captured scene image.

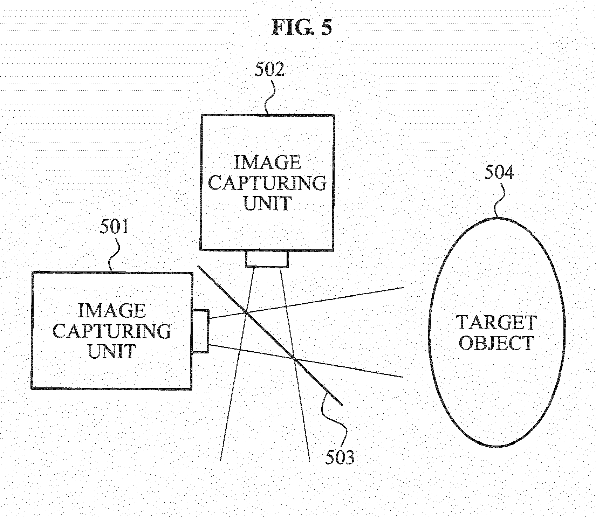

FIG. 5 is a diagram illustrating a process of capturing a scene image using a beam splitter according to an embodiment of the present invention.

FIG. 5 illustrates that an image capturing unit 501 corresponding to a general camera, and an image capturing unit 502 corresponding to a high speed camera may simultaneously capture a scene image on which a pattern image is projected on a target object 504, and reflected from the target object 504, using a beam splitter 502.

When the beam splitter 503 is used, the general camera image capturing unit 501 may be used to obtain a texture image similar to an image obtained by projecting a white light by an effect that a pattern image is temporally integrated, and the high speed camera image capturing unit 502 may be used to extract depth information by obtaining the pattern image.

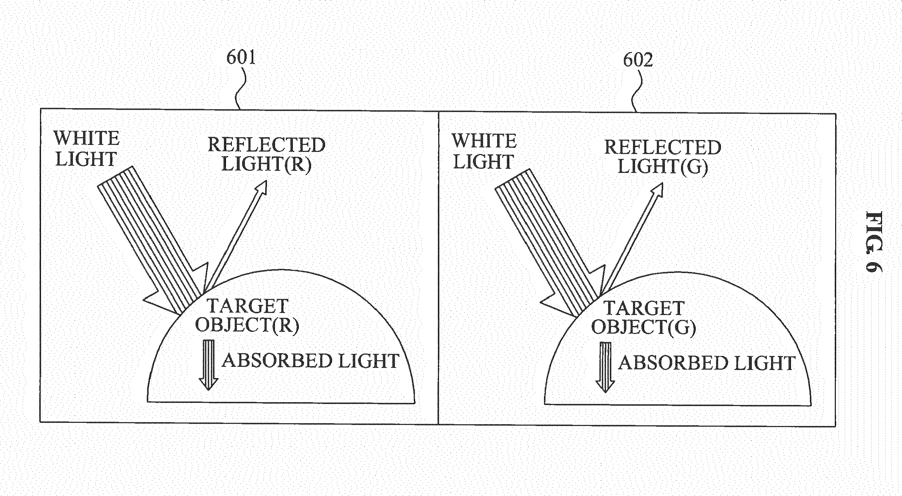

FIG. 6 illustrates a relation between a surface of a target object and a reflected light according to an embodiment of the present invention.

In order to decode a pattern image encoded based on a structured light technique by the image processing unit 104, a color of a scene image captured by the image capturing unit 103 may be needed to be verified. Here, the scene image may indicate an image on which the pattern image is projected on a target object and reflected from the target object.

The image processing unit 104 may verify the color of the scene image using a texture image of the target object. When the texture image of the target object is used, an effect by a color of a surface of the target object or by an ambiance illumination may be removable, and thus a more robust decoding may be performed.

When the pattern image is projected on the target object, the color of the scene. image that may be reflected based on the color of the surface of the target object or the ambiance illumination may be different. Referring to a left diagram 601 of FIG. 6, when the color of the surface of the target object corresponds to R, R in a white light projected on the target object may become a reflected light, and all of the other colors may become absorbed lights. Here, the white light may have an effect analogous to sequentially projecting the pattern image. Then, the scene image reflected from the target object may include R.

Referring to a right diagram 602 of FIG. 6, when the color of the surface of the target object corresponds to G, G in the white light projected on the target object may become a reflected light, and all of the other colors may become absorbed lights. Then, the scene image reflected from the target object may include G.

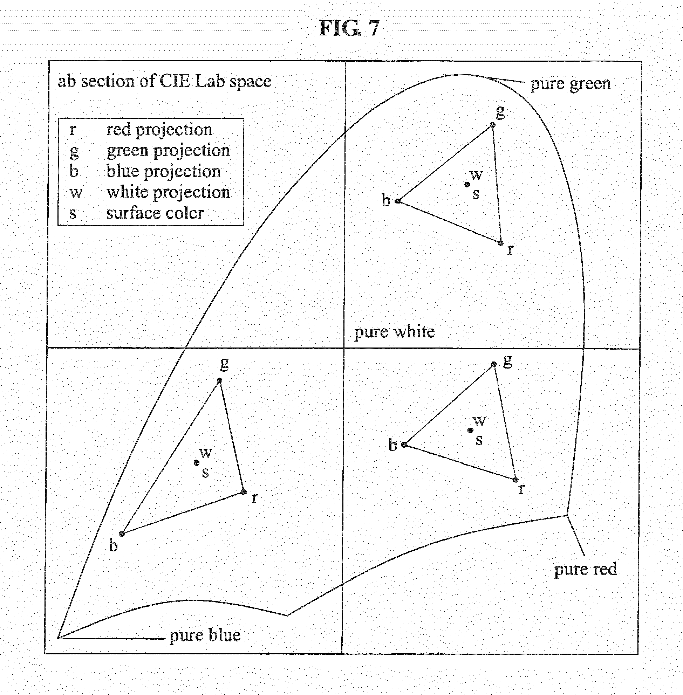

FIG. 7 illustrates a CIE Lab chart according to an embodiment of the present invention.

FIG. 7 illustrates a CIE Lab model showing how a color of a scene image captured by the image capturing unit 103 may be changed when a color of a surface of a target object corresponds to a reddish color, a greenish color, and a bluish color, and a color of a light projected on the target object corresponds to R, G, B, and white. The color of the light projected on the target object may correspond to the color of a pattern image projected on the target object.

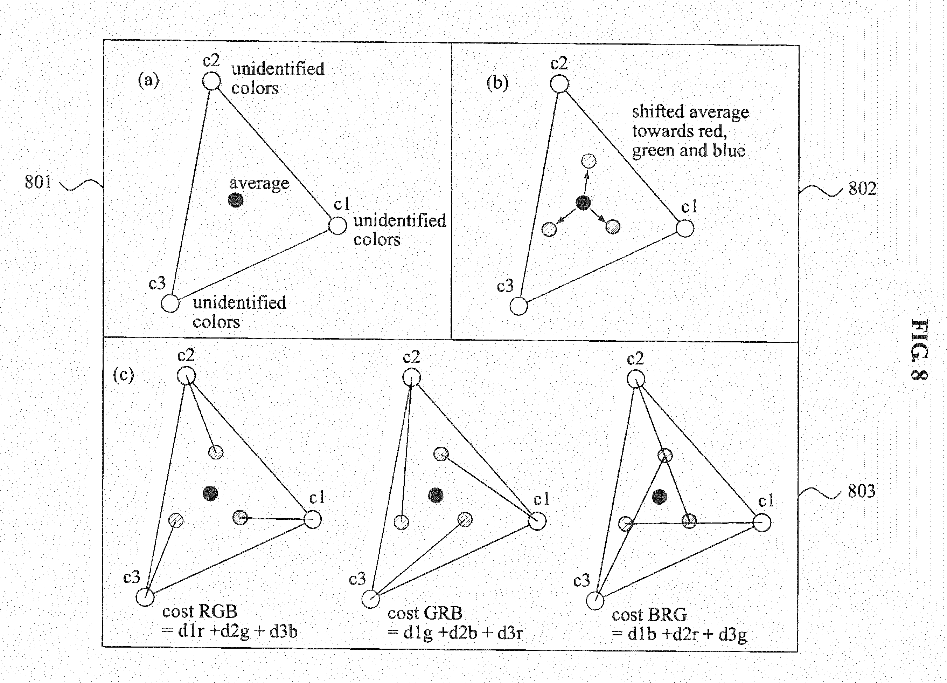

As shown in FIG. 7, coordinates of four lights projected on the target object may be biased towards the color of the surface of the target object. Then, when the image capturing unit 103 captures a scene image on which R, G, and B are projected on the target object and reflected from the target object, and the image processing unit 104 calculates an average of captured scene images, the color of the surface of the target object may be obtained. When the color of the surface of the target object is obtained, the color of the scene image may be obtained. A process of verifying the color of the scene image will be further described in FIG. 8.

FIG. 8, parts (a), (b), and (c), illustrates an example of verifying a color of a scene image according to an embodiment of the present invention.

Referring to FIG. 8, the part (a) 801 illustrates an average color of a scene image. Then, in the part (b) 802, a shifted color having a less difference from a color of the scene image among three shifted colors generated by adding R, G, and B to the average color may be verified as colors c1, c2, and c3 of the scene image.

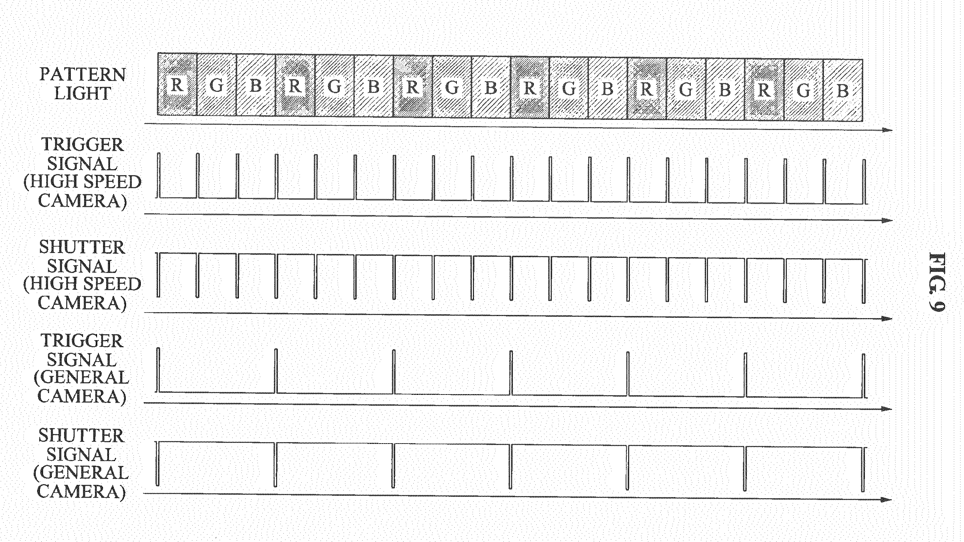

FIG. 9 illustrates a synchronizing signal between a pattern projecting unit and an image capturing unit according to an embodiment of the present invention.

In order to consecutively project a pattern image, and capture a scene image on which the pattern image is reflected from a target object, a synchronizing signal between the pattern image projecting unit 102 and the image capturing unit 103 may be needed. Referring to FIG. 9, a time diagram with respect to a shutter signal of the image capturing unit 103 based on a trigger signal of the pattern image projecting unit 102 to project a pattern image is illustrated. Here, when the image capturing unit 103 corresponds to a high speed camera or a general camera, different time diagrams may be shown.

The shutter signal of the image capturing unit 103 may be maintained during a period when the trigger signal of the pattern image projecting unit 102 occurs. When the image capturing unit 103 corresponds to the high speed camera, a cycle of a signal may be relatively short, whereas when the image capturing unit 103 corresponds to the general camera, the cycle of the signal may be relatively long. Referring to FIG. 9, the image capturing unit 103 corresponding to the high speed camera may capture each of three scene images on which R, G, and B of the pattern image are reflected, whereas the image capturing unit 103 corresponding to the general camera may capture a single scene image into which R, G, and B of the pattern image is reflected and temporally integrated.

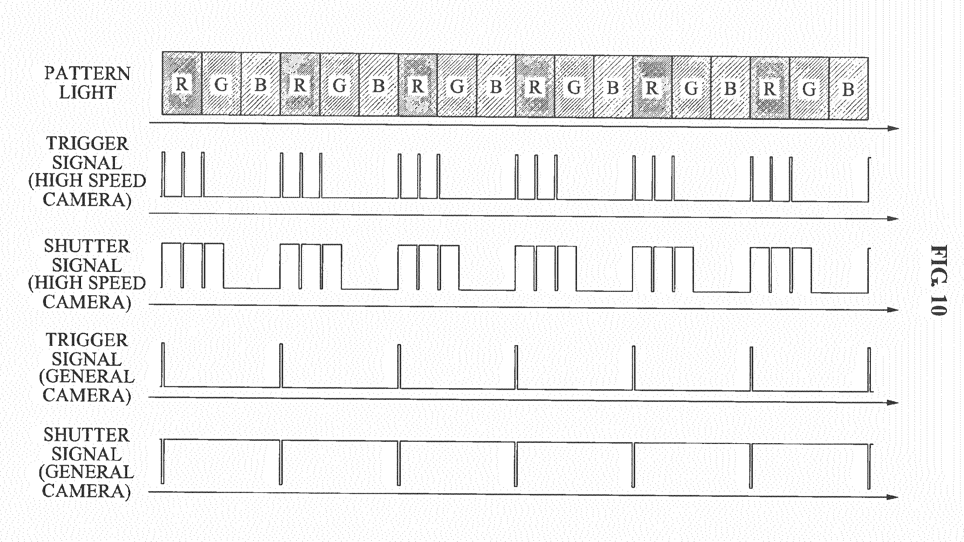

FIG. 10 illustrates a synchronizing signal between a pattern projecting unit and an image capturing unit according to another embodiment of the present invention.

In FIG. 10, when compared with FIG. 9, a cycle of a trigger signal of the pattern image capturing unit 102 may be relatively shorter. That is, FIG. 10 may indicate a case of a high speed motion of a target object. When the motion of the target object is fast, the pattern image may need to be more rapidly projected, and thus the cycle of the trigger signal in FIG. 10 may be shorter than the cycle of the trigger signal of FIG. 9.

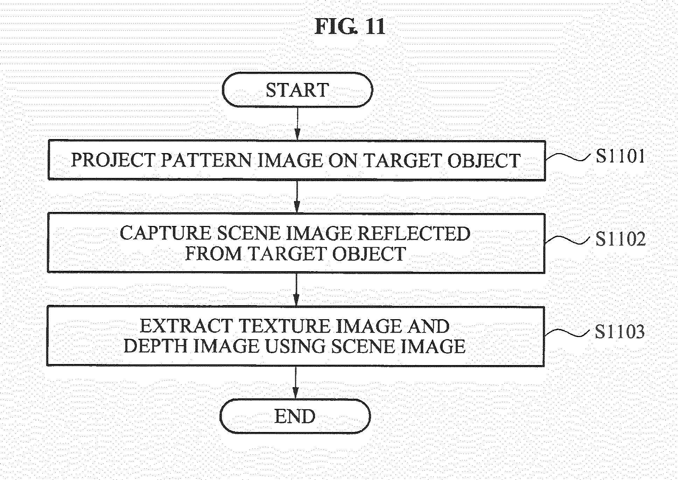

FIG. 11 is a flowchart illustrating an apparatus for simultaneously extracting a texture image and a depth image according to an embodiment of the present invention.

In operation S1101, the pattern image projecting unit 102 of the apparatus 101 may project a pattern image on a target object. For example, the pattern image projecting unit 102 may sequentially project the pattern image based on a temporal pattern arrangement or a spatial pattern arrangement. Here, the pattern image projecting unit 102 may project the pattern image based on a De Bruijin pattern arrangement among spatial pattern arrangements. The pattern image may be projected on the target object at a high speed based on the pattern arrangement, and may be integrated for a predetermined period of time to be a white light.

In operation S1102, the image capturing unit 103 of the apparatus 101 may capture a scene image on which the pattern image is reflected from the target object. For example, the image capturing unit 103 may capture, using a general camera and a high speed camera, the scene image on which the pattern image is reflected from the target object, using a beam splitter.

In operation S1103, the image processing unit 104 of the apparatus 101 may extract a texture image and a depth image using the captured scene image.

The image processing unit 104 may extract the depth image by applying a structured light technique and a stereo matching technique. Here, the image processing unit 104 may verify a color of the scene image based on the texture image of the target object, and may extract correspondence points using the color of the scene image based on the structured light technique. The image processing unit 104 may verify the color of the scene image using a difference between a shifted color generated by applying an R channel, a G channel, and a B channel to an average color of the scene image of the target object, and an original color of the scene image.

The image processing unit 104 may extract the texture image of the target object by averaging pattern images. When the image capturing unit 103 captures the scene image into which the pattern image is temporally integrated by maintaining a shutter speed to be relatively long, the image processing unit 104 may extract the texture image of the target object using the scene image into which the pattern image is temporally integrated.

The exemplary embodiments according to the present invention may be recorded in computer-readable media including program instructions to implement various operations embodied by a computer. The media may also include, alone or in combination with the program instructions, data files, data structures, and the like. The media and program instructions may be those specially designed and constructed for the purposes of the present invention, or they may be of the kind well-known and available to those having skill in the computer software arts.

Although a few exemplary embodiments of the present invention have been shown and described, the present invention is not limited to the described exemplary embodiments. Instead, it would be appreciated by those skilled in the art that changes may be made to these exemplary embodiments without departing from the principles and spirit of the invention, the scope of which is defined by the claims and their equivalents.

## Claims

1. An apparatus, comprising:
a pattern image projecting unit to project a pattern image on a target object;
an image capturing unit to capture a scene image on which the pattern image is reflected from the target object; and
an image processing unit to extract a texture image and a depth image using the captured scene image.

2. The apparatus of claim 1, wherein the pattern image projecting unit sequentially projects the pattern image based on a temporal pattern arrangement or a spatial pattern arrangement.

3. The apparatus of claim 1, wherein the pattern image is projected on the target object at a high speed based on a pattern arrangement, and is integrated for a predetermined period of time to be a white light.

4. The apparatus of claim 1, wherein the image processing unit extracts a depth image by applying a structured light technique and a stereo matching technique to the scene image.

5. The apparatus of claim 1, wherein the image processing unit extracts the texture image of the target object using a time integration characteristic of the pattern image.

6. The apparatus of claim 1, wherein:
the image capturing unit captures the scene image into which the pattern image is temporally integrated by maintaining a shutter speed to be relatively long; and
the image processing unit extracts the texture image of the target object using the scene image into which the pattern image is temporally integrated.

7. The apparatus of claim 4, wherein the image processing unit verifies a color of the scene image based on the texture image of the target object, and extracts correspondence points based on the color of the scene image using the structured light technique.

8. The apparatus of claim 7, wherein the image processing unit verifies the color of the scene image using a difference between a shifted color generated by applying a red (R) channel, a green (G) channel, and a blue (B) channel to an average color of the scene image of the target object, and an original color of the scene image.

9. The apparatus of claim 1, wherein the image capturing unit is synchronized based on a trigger signal of the pattern image projected by the pattern image projecting unit.

10. The apparatus of claim 1, wherein the pattern image projecting unit controls a speed of projection of the pattern image based on a speed of the target object in motion.

11. A method performed by an apparatus to simultaneously obtain a texture image and a depth image, the method comprising:
projecting, by a pattern image projecting unit, a pattern image on a target object;
capturing, by an image capturing unit, a scene image on which the pattern image is reflected from the target object; and
extracting, by an image processing unit, a texture image and a depth image using the captured scene image.

12. The method of claim 11, wherein the projecting of the pattern image sequentially projects the pattern image based on a temporal pattern arrangement or a spatial pattern arrangement.

13. The method of claim 11, wherein the pattern image is projected on the target object at a high speed based on a pattern arrangement, and is integrated for a predetermined period of time to be a white light.

14. The method of claim 11, wherein the extracting of the texture image and the depth image extracts the depth image by applying a structured light technique and a stereo matching technique to the scene image.

15. The method of claim 11, wherein the extracting of the texture image and the depth image extracts the texture image of the target object using a time integration characteristic of the pattern image.

16. The method of claim 11, wherein:
the capturing of the scene image captures a scene image into which the pattern image is temporally integrated by maintaining a shutter speed to be relatively long; and
the extracting of the texture image and the depth image extracts the texture image of the target object using the scene image into which the pattern image is temporally integrated.

17. The method of claim 13, wherein the extracting of the texture image and the depth image verifies a color of the scene image based on the texture image of the target object, and extracts correspondence points based on the color of the scene image using the structured light technique.

18. The method of claim 17, wherein the extracting of the texture image and the depth image verifies the color of the scene image using a difference between a shifted color generated by applying a red (R) channel, a green (G) channel, and a blue (B) channel to an average color of the scene image of the target object, and an original color of the scene image.

19. The method of claim 11, wherein the capturing of the scene image captures the scene image reflected from the target object, by synchronizing with a trigger signal of the projected pattern image.

20. The method of claim 11, wherein the projecting of the pattern image controls a speed of projection of the pattern image based on a speed of the target object in motion.
